# EUROPEAN PATENT APPLICATION

(11) **EP 2 942 444 A1**
(43) Date of publication of application: **11.11.2015**
(21) Application number: 15167015.5
(22) Date of filing: 08.05.2015
(51) Int. Cl.: E04B 1/16, E04B 2/86

(54) **METHOD AND APPARATUS FOR MONOLITHIC CONCRETE CONSTRUCTION**

(30) Priority: 09.05.2014 GB 201408248
(71) Applicant: Charcon Limited, Retford, Nottinghamshire DN22 8RU (GB)
(72) Inventor: Townend, Peter, Jackfield Telford, TF8 7LS (GB)
(74) Representative: Wynne-Jones, Laine and James LLP

(57) **Abstract**

An assembly for forming a concrete structure, the assembly comprising a first side wall (2) comprising a pair of opposing parallel wall panels (3) defining a void (13) therebetween, and a base tray (4) comprising a receptacle coupled to said side wall (2) at a lower end thereof, said first side wall (2) having an opening (14) in an inner wall panel defining a flow path between said void and said receptacle.

## Description

This invention relates generally to building systems, and more particularly, to a method and apparatus for the monolithic construction of a structure comprising a base and walls, such as insulated walls, from pourable building material, such as concrete, using wall cassettes comprised of two opposed wall panels.

A known technique for the construction of walls from pourable building material (e.g. pourable concrete), comprises the use of a pair of opposed, usually insulating, wall panels (known as insulated concrete framework or ICF), formed of, for example, a foamed polymeric material, and held together in opposed, spaced-apart relation by a cross-tying system, thereby creating a central void which is filled with ready-mix concrete.

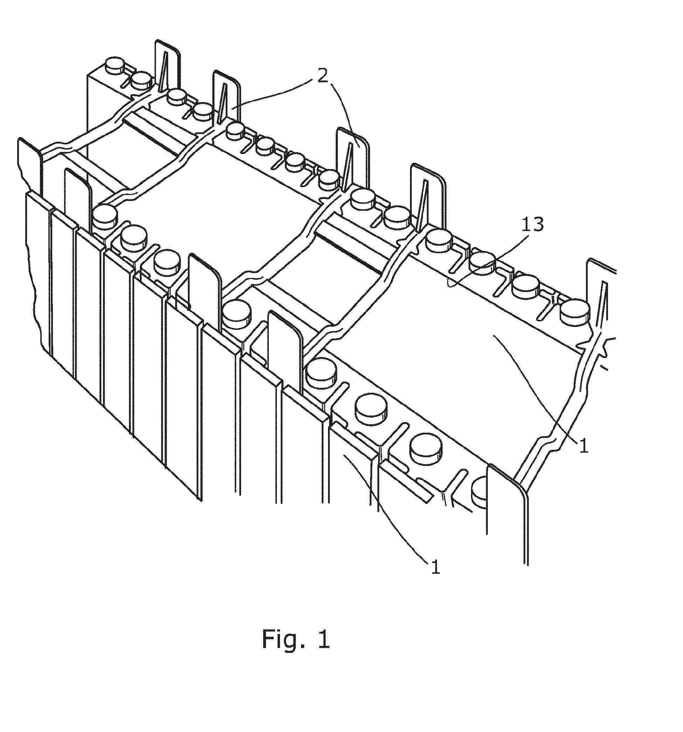

Referring to Figure 1 of the drawings, there is illustrated a schematic perspective view of a portion of an ICF wall, each wall section comprising two opposing insulated panels 1, connected together, and held in spaced-apart relation, by cross-ties 2 to define a central void 13 for receiving ready-mix concrete during the construction process. In use, in order to build a wall of a required height, wall sections are built up, one on top of the other, with cross-ties between each layer. This may be done on-site or entire walls of a predetermined height may be pre-assembled in this manner and transported, fully assembled for use, to a site.

In concrete construction, it is standard practice to construct a foundation and wait for it to cure before building walls. This leads to a joint area known as a cold joint. In many, smaller construction environments, the cost and difficulty of undertaking multiple concrete pours can be prohibitive and it would be desirable to provide a method and apparatus which addresses at least some of these issues.

In accordance with an aspect of the present invention, there is provided an assembly for forming a concrete structure, the assembly comprising a first side wall comprising a pair of opposing parallel wall panels defining a void therebetween, and a base tray comprising a receptacle coupled to said side wall at a lower end thereof, said first side wall having an opening in an inner wall panel defining a flow path between said void and said receptacle.

In one exemplary embodiment, the assembly may further comprise a tapered prop extending from an upper end of said side wall to an outer edge of said base tray.

In an alternative exemplary embodiment, the assembly may comprise a second side wall comprising a pair of opposing parallel wall panels defining a void therebetween, said first and second side walls being coupled to said base tray at opposing edges thereof. In this case, the second side wall may also have an opening in an inner wall panel defining a flow path between said void and said receptacle.

A top tray may be provided between the upper edges of the inner wall panels of the first and second side walls. The outer wall panels of the first and second side walls may be longer than the inner wall panels so as to define a recess between the top tray and the upper edge of the outer wall panels.

In all cases, the assembly may be prefabricated off-site and transportable to a site for use.

In accordance with another aspect of the present invention, there is provided a method of forming a concrete structure, the method comprising providing an assembly as defined above, introducing a pourable concrete mixture into the void of the first side wall such that concrete enters the base tray via the opening in the lower end of the inner wall panel thereof, until said base tray is filled to a predetermined level with concrete, allowing said concrete in said base tray to become gelatinous, and introducing further pourable concrete mixture into said void until said void is filled to a predetermined level.

In the case defined above, where the assembly comprises two opposing side walls, the pourable concrete mixture may be introduced into the voids of both side walls simultaneously. In the same case, where a top tray is provided between the inner wall panels of the opposing side walls, the pourable concrete mixture may be pumped into the voids until the voids are completely full and the recess defined between the top tray and the upper ends of the outer wall panels of the opposing side walls is filled to a predetermined level.

In the alternative case defined above, where only a single side wall is provided, the pourable concrete mixture may be pumped into the void until the void is completely full.

Embodiments of the present invention will now be described by way of examples only and with reference to the accompanying drawings, in which:
Figure 1 is a schematic perspective view of a portion of an ICF wall;
Figure 2 is a schematic side cross sectional view of a system according to a first exemplary embodiment of the present invention, having two wall cassettes, a base tray and a top tray;
Figure 3 is a schematic cross-sectional view of a system according to a second exemplary embodiment of the present invention, having one wall cassette, a base tray and a prop;
Figure 4 is a schematic cross-sectional view of the system of Figure 2 with ready mix concrete on four planes; and
Figure 5 is a schematic cross-sectional view of the system of Figure 3 with ready mix concrete on two planes.

In general, embodiments of the present invention relate to factory-built insulating concrete framework (ICF) wall cassettes, attached to and used in combination with a base tray which acts to contain ready mix concrete on-site. The base tray may act as a damp proof membrane in some embodiments. The specialised cassette is constructed with one wall panel omitted at the bottom of the structure (within the base tray) to allow ready mix concrete to pour through into the tray. As will be seen, in one exemplary embodiment, the top can also be closed off with a top tray which enables continuous monolithic pouring of concrete in up to six planes. An adjustable propping system can be incorporated to adjust walls and tray for truth, both vertically and horizontally, and plumb.

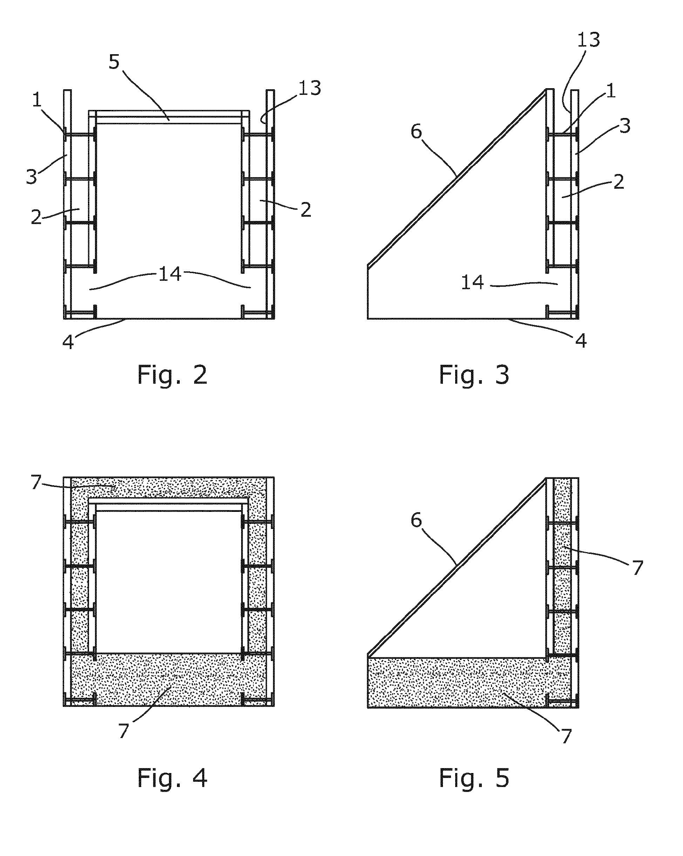

Thus, referring first to Figure 2 of the drawings, a system according to a first aspect of the present invention comprises a pair of wall cassettes 2 fitted and attached to a base tray 4. Each wall cassette 2 comprises a pair of opposing, parallel wall panels 3 which are connected together and held in spaced apart relation, to define a void 13 therebetween, by means of cross ties 2.

A single, inner wall panel is omitted at the lower end of each of the wall cassettes 2 to define an opening 14 which defines a channel between the voids 13 within the wall cassettes 2 and the interior or the base tray 4. The outer wall panels of the wall cassettes 2 are longer than the inner wall panels, as shown, and a top tray 5 is placed across the opening defined between the two inner wall panels. It will be appreciated that the wall panels of each wall cassette may not both be made of the same material. They may both comprise foamed polymeric panels, as in known ICF wall cassettes, but in alternative embodiments, the outer wall may be of an insulative material, such as foamed polymeric material, and the inner wall may be formed of a corrosion resistant material suitable for forming the inner lining of a tank, for example.

In an alternative exemplary embodiment, the system may comprise a single wall cassette 2, again comprised of two opposing, parallel walls 3 held together in spaced apart relation by a plurality of cross ties 1 so as to define a void 13 therebetween. In this case, the wall cassette 2 is fitted and attached to one side of a base tray 4 and a single, inner wall panel is omitted at the lower end of the wall cassette 2 to define an opening 14 which defines a channel between the void 13 within the wall cassette 2 and the interior or the base tray 4. The structure is braced with a tapered prop 6 which extends from the upper end of the inner wall panel of the wall cassette 2 and the outer edge of the base tray 4.

The assemblies illustrated in and described with respect to Figures 2 and 3 may be assembled off-site and transported to a construction site for use for installation.

In use, the chosen assembly is placed in any position required by the application and the concrete pour is commenced. In respect of the assembly illustrated and described in Figure 2 of the drawings, ready mix concrete may be poured into the assembly via the open end of one or, preferably both of the wall cassettes 2 until the base tray 4 is filled up to the top of the opening 14 defined by the missing wall panel. Self levelling concrete is preferably used, which is a polymer-modified cement with high flow characteristics, to ensure that a flat surface is achieved at the top of the base tray. An accelerator is added to the ready mix concrete, such as Ca(NO₃)₂ or NANO₃, which speeds up the setting of the concrete, such that the concrete filling the base tray sets to a so-called gel phase in around 15 minutes, following which concrete pouring via the open ends of the wall cassettes 2 is resumed, until the voids 13 and the space defined between the top tray 5 and the upper ends of the outer wall panels are filled with concrete, as shown in Figure 4 of the drawings. As the second concrete pour can be commenced at the gel phase of the initially poured concrete, no cold joint is formed.

Referring to Figure 5 of the drawings, in relation to the second exemplary embodiment, a similar process is performed. Thus, initially, ready mix, self levelling concrete, including the accelerator, is poured via the open end of the wall cassette 2 into the assembly, filling the base tray up to the top of the opening 14 formed by the missing wall panel. When the initially poured concrete has set to the so called gel phase, the second concrete pour is commenced, to fill the void 13 in the wall cassette up to the top of wall panels. In this case, the prop 6 simply acts as a support for the wall cassette during the concrete pouring process, and can be removed after the concrete has cured, to leave a fully formed wall and foundation in place.

It will be appreciated by a person skilled in the art that modifications and variations can be made to the described embodiments without departing from the scope of the invention as claimed.

## Claims

1. An assembly for forming a concrete structure, the assembly comprising a first side wall comprising a pair of opposing parallel wall panels defining a void therebetween, and a base tray comprising a receptacle coupled to said side wall at a lower end thereof, said first side wall having an opening in an inner wall panel defining a flow path between said void and said receptacle.

2. An assembly according to claim 1, further comprising a tapered prop extending from an upper end of said side wall to an outer edge of said base tray.

3. An assembly according to claim 1, comprising a second side wall comprising a pair of opposing parallel wall panels defining a void therebetween, said first and second side walls being coupled to said base tray at opposing edges thereof. In this case, the second side wall may also have an opening in an inner wall panel defining a flow path between said void and said receptacle.

4. An assembly according to claim 3, comprising a top tray extending between the upper edges of the inner wall panels of the first and second side walls.

5. An assembly according to claim 4, wherein the outer wall panels of the first and second side walls are longer than the inner wall panels so as to define a recess between the top tray and the upper edge of the outer wall panels.

6. A prefabricated assembly according to any preceding claim.

7. A method of forming a concrete structure, the method comprising providing an assembly according to claim 1, introducing a pourable concrete mixture into the void of the first side wall such that concrete enters the base tray via the opening in the lower end of the inner wall panel thereof, until said base tray is filled to a predetermined level with concrete, allowing said concrete in said base tray to become gelatinous, and introducing further pourable concrete mixture into said void until said void is filled to a predetermined level.

8. A method according to claim 7, comprising providing an assembly according to any of claims 3 to 5, and introducing the pourable concrete mixture into the voids of both side walls simultaneously.

9. A method according to claim 8, comprising providing an assembly according to claim 5, and introducing the pourable concrete mixture into the voids of the side walls until the voids are completely full and the recess defined between the top tray and the upper ends of the outer wall panels of the opposing side walls is filled to a predetermined level.

10. A method according to claim 7, comprising providing an assembly according to claim 2, and introducing the pourable concrete mixture into the void until the void is substantially completely full.

11. An assembly for forming a concrete structure substantially as herein described with reference to Figures 2 to 5 of the drawings.

12. A method for forming a concrete structure substantially as herein described with reference to Figures 2 to 5 of the accompanying drawings.
